# EUROPÄISCHE PATENTANMELDUNG

(11) **EP 2 503 248 A1**
(43) Veröffentlichungstag der Anmeldung: **26.09.2012**
(21) Anmeldenummer: 12157501.3
(22) Anmeldetag: 29.02.2012
(51) Int. Cl.: F24C 15/10

(54) **Kochfeld mit einer Kochfeldplatte und einer Wanne zur Aufnahme einer Heizeinheit**

(30) Priorität: 22.03.2011 ES 201130405
(71) Anmelder: BSH Bosch und Siemens Hausgeräte GmbH, 81739 München (DE)
(72) Erfinder: Ferrer Salillas, Alejandro Jesus, 50010 Zaragoza (ES); Martin Gomez, Damaso, 20012 Zaragoza (ES); Pina Gadea, Carmelo, 50008 Zaragoza (ES); Torrubia Marco, Demetrio, 50003 Zaragoza (ES); Valencia Betran, María, 50010 Zaragoza (ES)

(57) **Zusammenfassung**

Die Erfindung betrifft ein Kochfeld (1) mit einer Kochfeldplatte (2) und zumindest einer, unter der Kochfeldplatte (2) angeordneten Heizeinheit (4, 18), und mit einer unter der Kochfeldplatte (2) angeordneten und mit dieser über einen Trägerrahmen (7) verbundenen Wanne (6), die die Heizeinheit (4, 18) von unten umgibt, wobei die Wanne (6) an ihren freien Enden (9) ihrer vertikalen Wände (10, 11) eine Einhängevorrichtung (8) aufweist, welche zum Einhängen in den Trägerrahmen (7) ausgebildet ist.

## Beschreibung

Die Erfindung betrifft ein Kochfeld mit einer Kochfeldplatte und zumindest einer, unter der Kochfeldplatte angeordneten Heizeinheit, sowie mit einer unter der Kochfeldplatte angeordneten und mit dieser über einen Trägerrahmen verbundenen Wanne, die die Heizeinheit von unten umgibt.

Eine derartige Ausgestaltung ist aus der DE 10 163 830 A1 bekannt.

Bei Induktionskochfeldern ist es üblich, dass die unter der Kochfeldplatte angeordneten Induktoren von unten her durch eine wannenartige Aufnahmen umgeben sind, wobei diese aus einem Metall, beispielsweise Aluminium, ausgebildet ist. Diese Wannen sind einerseits dazu da, eine elektromagnetische Abschirmung der Induktoren zur Seite und nach unten hin zu gewährleisten. Bei anderen Ausführungen kann jedoch auch vorgesehen sein, dass diese Wannen mit den Induktoren gekoppelt sind und somit die elektromagnetische Wirkung und die elektromagnetische Felderzeugung unterstützen. Diese Wannen sind entsprechend zu befestigen.

Es ist Aufgabe der vorliegenden Erfindung, eine derartige Befestigung einer Wanne eines Kochfelds platzsparend und mechanisch einfach auszugestalten, so dass jedoch die mechanisch stabile und sichere Anbringung gewährleistet ist.

Diese Aufgabe wird durch ein Kochfeld, welches die Merkmale nach Anspruch 1 aufweist, gelöst.

Ein erfindungsgemäßes Kochfeld umfasst eine Kochfeldplatte und zumindest eine unter der Kochfeldplatte angeordnete Heizeinheit. Das Kochfeld umfasst darüber hinaus eine unter der Kochfeldplatte angeordnete und mit dieser über einen Trägerrahmen verbundene Wanne, die die Heizeinheit von unten umgibt. Die Wanne weist an ihren freien Enden ihrer vertikalen Wände eine Einhakvorrichtung bzw. Einhängevorrichtung auf, welche zum Einhängen in den Trägerrahmen ausgebildet ist. Die Einhängevorrichtung bzw. Einhakvorrichtung stellt eine besonders einfache Ausgestaltung der Befestigungsmöglichkeit der Wanne an dem Trägerrahmen dar. Darüber hinaus stellt sie im Hinblick auf die gemäß der Erfindung ganz spezifische örtliche Anbringen, nämlich an den freien deren Enden der vertikalen Wände der Wanne, auch eine sehr exponierte örtliche Anbringungsstelle dar, so dass die Verbindung mit dem Trägerrahmen besonders einfach ermöglicht ist. Darüber hinaus stellt gerade diese Ausgestaltung auch eine sehr verschleißarme und mechanisch belastbare Verbindung dar.

Gerade dann, wenn das Kochfeld ein Induktionskochfeld ist und die Heizeinheit ein Induktor, ermöglicht diese Verbindung und Befestigung der Wanne an dem Trägerrahmen auch eine Verbesserung der Funktionalität der Wanne, insbesondere im Hinblick auf ihre Abschirmwirkung und/oder Unterstützungswirkung bzgl. der Erzeugung des elektromagnetischen Feldes der Induktoren.

Darüber hinaus kann durch eine derartige Ausgestaltung der Befestigung zwischen dem Trägerrahmen und der Wanne auch eine sehr bauteilminimierte Ausgestaltung geschaffen werden, so dass Montagefehler und unerwünschte Montagetoleranzen zumindest reduziert und vorzugsweise ganz eliminiert werden können.

Vorzugsweise ist vorgesehen, dass die Einhängevorrichtung zumindest einen schräg nach außen und unten orientierten Einhängeschenkel aufweist. Dies ist eine besonders hervorzuhebende Ausgestaltung, da somit an dem oberen freien Ende der vertikalen Wände ein nach außen und schräg nach unten verlaufender Einhängeschenkel ausgebildet ist. Dies ermöglicht in besonders einfacher Weise das Einhängen der Wanne in den Trägerrahmen, wobei durch diese Ausgestaltung die gesamte Anordnung auch sehr kompakt ausgestaltet werden kann.

Darüber hinaus kann gerade durch diese Formgebung und örtliche Positionierung des Einhängeschenkels eine sehr zuverlässige und robuste mechanische Verbindung geschaffen werden, die andererseits jedoch auch schnell und ohne Zerstörung lösbar ist.

Vorzugsweise ist vorgesehen, dass die Einhängevorrichtung einstückig mit der Wanne ausgebildet ist. Dies ist besonders vorteilhaft im Hinblick auf die Bauteilreduzierung des Kochfelds. Darüber hinaus können zusätzlicher Montageaufwand ebenso, wie im Vergleich zu separaten Komponenten Positionstoleranzen vermieden werden.

Es kann jedoch auch vorgesehen sein, dass die Einhängevorrichtung als separates Element ausgebildet ist, welches an der Wanne befestigt ist. Beispielsweise kann hier vorgesehen sein, dass ein Einhängeschenkel als separates Element zur Wanne ausgebildet ist und beispielsweise durch eine zerstörungsfrei unlösbare Verbindung, wie ein Schweißen oder Löten oder Kleben oder dergleichen an der Wanne befestigt ist. Es kann jedoch auch eine anderweitige lösbare Verbindung, wie ein Schrauben oder dergleichen vorgesehen sein.

Vorzugsweise ist vorgesehen, dass sich die Einhängevorrichtung zumindest im Wesentlichen über die gesamte Länge des freien Endes bzw. des oberen Randes der vertikalen Wände der Wanne ausbilden. Dadurch kann über einen relativ großen Weg eine Verbindungsmöglichkeit mit dem Trägerrahmen geschaffen werden. Auftretende Tragekräfte können daher über größere Strecken bzgl. der Kontaktierung mit dem Trägerrahmen aufgenommen und abgeleitet werden.

Es kann vorgesehen sein, dass der Trägerrahmen an der Unterseite der Kochfeldplatte befestigt ist. Dadurch kann vermieden werden, dass sich der Trägerrahmen auch seitlich über die Kochfeldplatte hinaus erstreckt und unerwünschten Bauraum einnimmt.

Insbesondere ist vorgesehen, dass der Trägerrahmen gegenüber dem Rand der Kochfeldplatte nach innen versetzt angeordnet ist.

Es kann vorgesehen sein, dass das freie untere Ende des Trägerrahmens als Aufnahme für einen Einhängeschenkel der Einhängevorrichtung ausgebildet ist. Das Ineinandergreifen ist dadurch besonders einfach gewährleistet und kann mechanisch stabil und robust gehalten werden. Insbesondere ist die Aufnahme von oben zugänglich und ermöglicht somit das Einhängen des Einhängeschenkels von oben in die Aufnahme.

Es kann vorgesehen sein, dass der Einhängeschenkel im eingehängten Zustand von oben in die Aufnahme eingreifend angeordnet ist. Dies ist dahingehend vorteilhaft hervorzuheben, da somit ein unerwünschtes Herausrutschen zur Seite oder nach untern verhindert werden kann, so dass die Wanne nicht unerwünschter Weise nach unten verloren gehen kann. Darüber hinaus ist durch diese Ausgestaltung auch eine besonders mechanisch stabile Verbindung geschaffen, die zur Aufnahme auch größerer Kräfte ausgebildet ist. Dies ist insbesondere dann, wenn auf dem Boden der Wanne Komponenten des Kochfelds angeordnet sind und tragend gehalten werden müssen, vorteilhaft.

Es kann vorgesehen sein, dass die Aufnahme einen horizontalen Schenkel als Aufnahme für den Einhängeschenkel aufweist. Dieser horizontale Schenkel kann das Endteil des unteren freien Endes des Trägerrahmens sein. Es kann jedoch auch vorgesehen sein, dass anschließend an diesen horizontalen Schenkel ein weiterer schräg nach unten und zur Wanne hin orientierter Schenkel als Endteil ausgebildet ist. Dadurch können unterschiedliche individuelle Lösungen geschaffen werden, die für sich betrachtet weitere Vorteile im Hinblick auf die Positionierung des Trägerrahmens und der Wanne relativ zueinander ermöglichen.

So kann vorgesehen sein, dass bei diesem weiteren zusätzlichen schräg nach unten orientierten Endteil, welches an den horizontalen Schenkel des Trägerrahmens anschließt, dieses Endteil unterhalb des Einhängeschenkel der Einhängevorrichtung an einer Außenseite der vertikalen Wand der Wanne anliegt und dadurch eine weitere, insbesondere horizontale Positionsfixierung der Wanne ermöglicht.

In einer weiteren Ausführung kann vorteilhafterweise vorgesehen sein, dass die Aufnahme einen schräg nach oben orientierten Schenkel als Endteil aufweist, und dadurch eine Aufnahmemulde für den Einhängeschenkel gebildet ist. Bei einer derartigen Ausgestaltung kann insbesondere in Verbindung mit einem schräg nach außen und unten orientierten Einhängeschenkel eine besondere mechanische Verbindung geschaffen werden, bei der die Wanne nicht mehr nach oben oder zur Seite verrutschen kann.

Vorzugsweise ist die Wanne aus einem metallischen Material, insbesondere Aluminium ausgebildet.

Bei einer Ausführung kann vorgesehen sein, dass das Heizelement auf dem Boden der Wanne aufsitzt. Neben der Funktionalität, bei der die Wanne dann auch als Träger für das Heizelement dient, kann gerade dann, wenn die das Heizelement ein Induktor ist, bei dieser Ausgestaltung mit direkter Kontaktierung des Induktors mit dem Boden der Wanne die Wanne, insbesondere dann wenn sie aus einem metallischen Material ausgebildet ist, auch zur Unterstützung der Erzeugung des elektromagnetischen Feldes beitragen.

Es kann auch vorgesehen sein, dass das Heizelement berührungslos zum Boden der Wanne angeordnet ist und an der Unterseite der Kochfeldplatte befestigt ist. Bei einer derartigen Ausgestaltung sind somit quasi alle Komponenten separat für sich betrachtet direkt an der Unterseite der Kochfeldplatte angeordnet. Diesbezüglich kann beispielsweise ein Ankleben vorgesehen sein. Auf die mechanische Hängeverbindung zwischen dem Trägerrahmen und der Wanne wirken dann geringere Kräfte, da insbesondere die Heizelemente nicht von der Wanne getragen werden müssen und dadurch keine Tragekräfte auf diese genannte Verbindung zwischen der Wanne und zwischen dem Trägerrahmen auftreten. Lediglich das Eigengewicht der Wanne wirkt dann auf diese mechanische Verbindung. Diese Ausgestaltung ermöglicht auch eine bessere Ebenheit der Kochfeldplatte.

Es kann vorgesehen sein, dass die Wanne zur Umgebung lediglich eines Heizelements ausgebildet ist, wenn das Kochfeld mehrere Heizelemente aufweist. Insbesondere ist dann vorgesehen, dass jedes der Heizelemente von unten und von der Seite durch eine eigene Wanne umgeben ist.

Diesbezüglich sind vielfältige Ausgestaltungen möglich, bei denen ein oder mehrere Heizelemente durch ein oder mehrere Wannen umgeben sind, wobei auch dann wiederum optional vorgesehen sein kann, dass die Wannen direkt in Kontakt mit den Heizelementen sind oder nicht, was insbesondere bei den Induktoren dann die zusätzliche Funktion der Verstärkung der erzeugten elektromagnetischen Felder bewirkt oder letztendlich dann nur die Funktion der elektromagnetischen Abschirmung gewährleistet, wenn kein derartiger direkter Kontakt zwischen einer Wanne und einem Heizelement in Form eines Induktors gegeben ist.

Ausführungsbeispiele der Erfindung werden nachfolgend anhand schematischer Zeichnungen näher erläutert. Es zeigen:
- Fig. 1: eine Schnittdarstellung durch ein erstes Ausführungsbeispiel eines erfindungsgemäßen Induktionskochfelds;
- Fig. 2: eine Teildarstellung im Schnitt eines Induktionskochfelds gemäß einem weiteren Ausführungsbeispiel;
- Fig. 3: eine Teildarstellung eines Schnitts durch ein Induktionskochfeld mit einem dritten Ausführungsbeispiel; und
- Fig. 4: eine Schnittdarstellung durch ein viertes Ausführungsbeispiel eines erfindungsgemäßen Induktionskochfelds.

In den Figuren werden gleiche oder funktionsgleiche Elemente mit den gleichen Bezugszeichen versehen.

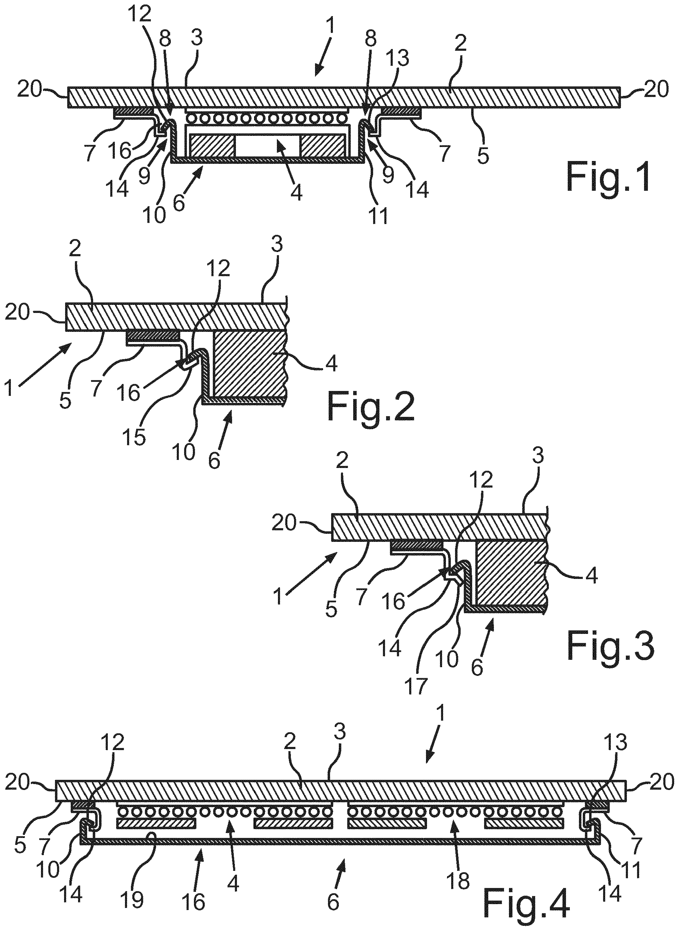

In Fig. 1 ist in einer schematischen Schnittdarstellung ein Ausführungsbeispiel eines Induktionskochfelds 1 gezeigt. Das Induktionskochfeld 1 umfasst eine Kochfeldplatte 2, welche beispielsweise aus Glaskeramik ausgebildet sein kann. Auf einer Oberseite 3 der Kochfeldplatte 2 können an spezifisch gekennzeichneten Kochzonen Zubereitungsgefäße wie Pfannen oder Töpfe oder dergleichen aufgestellt werden und darin eingebrachte Lebensmittel zubereitet werden. Dazu sind unterhalb der Kochfeldplatte2 ein oder mehrere als Induktoren ausgebildete Heizelemente angeordnet. Im Ausführungsbeispiel ist dabei beispielhaft ein Induktor 4 gezeigt. Dieser ist im Ausführungsbeispiel direkt an einer Unterseite 5 der Kochfeldplatte 2 angeordnet und mit dieser kontaktiert.

Wie aus der Darstellung in Fig. 1 zu erkennen ist, ist der Induktor 4 in einer Wanne 6 aufgenommen, welche diesen Induktor 4 seitlich und von unten umgibt. Die Wanne 6 ist im Ausführungsbeispiel aus Aluminium ausgebildet. Sie ist darüber hinaus mit einem Trägerrahmen 7, der direkt an der Unterseite 5 der Kochfeldplatte 2 befestigt, beispielsweise angeklebt, ist, verbunden.

Dazu ist vorgesehen, dass die Wanne 6 eine Einhängevorrichtung 8 aufweist, die an freien Enden 9 von vertikalen Wänden 10 und 11 der Wanne 6 ausgebildet ist. Im Ausführungsbeispiel umfasst die Einhängevorrichtung 8 an den freien Enden 9 ausgebildete Einhängeschenkel 12 und 13. Diese sind gemäß dem Ausführungsbeispiel in Fig. 1 schräg nach außen und unten orientierte Schenkel.

Es wird daher eine Einhängeverbindung mit dem Trägerrahmen 7 ausgebildet. Dieser Trägerrahmen 7 weist im Ausführungsbeispiel gemäß Fig. 1 an seinem unteren freien Ende einen horizontalen Schenkel 14 auf, der in diesem Ausführungsbeispiel das Endteil des Trägerrahmens 7 bildet. Wie zu erkennen ist, ist dieser horizontale Schenkel 14 in Richtung der Wanne 6 und insbesondere in Richtung der vertikalen Wände 10 und 11 orientiert. Im zusammengesetzten Zustand des Kochfelds 1 sitzen die Einhängeschenkel 12 und 13 auf der Oberseite dieser horizontalen Schenkel 14 eingehängt auf. Es ist somit vorgesehen, dass die Einhängeschenkel 12 und 13 von oben in eine Aufnahme 16 des Trägerrahmens, die im gezeigten Ausführungsbeispiel durch die Schenkel 14 gebildet ist, von oben eingehängt sind.

In der Darstellung gemäß Fig. 2 ist eine weitere Schnittdarstellung eines zweiten Ausführungsbeispiels gezeigt, wobei hier lediglich ein Teilbereich des Induktionskochfelds 1 gezeigt ist. Im Unterschied zur Ausgestaltung in Fig. 1 ist hier vorgesehen, dass der Trägerrahmen 7 als Endteil nicht einen vollständig horizontal orientierten Schenkel 14 wie in Fig. 1 aufweist, sondern einen schräg nach oben orientierten Schenkel 15 als Endteil aufweist. Durch diese Orientierung wird somit eine Aufnahme 16 als Mulde gebildet, in welche der Einhängeschenkel 12 von oben eingehängt ist.

In Fig. 3 ist ein weiteres Ausführungsbeispiel eines Induktionskochfelds 1 gezeigt, wobei hier wiederum eine Schnittdarstellung teilweise gezeigt ist und somit in analoger Darstellung zu Fig. 2 gegeben ist. Im Unterschied zu den Ausgestaltungen in Fig. 1 und 2 ist hier vorgesehen, dass der Trägerrahmen 7 an seinem unteren freien Ende anschließend an einen horizontalen Schenkel 14 einen weiteren Schenkel 17 als Endteil aufweist, welcher schräg nach unten orientiert angeordnet ist. Wie aus der Darstellung in Fig. 3 zu erkennen ist, ist dabei vorzugsweise vorgesehen, dass dieser Schenkel 17 als Endteil des Trägerrahmens 7 an der Außenseite der vertikalen Wand 10 der Wanne 6 anliegt und zwar unterhalb dem Einhängeschenkel 12. Entsprechendes kann auch bei den Ausführungen in Fig. 1 und 2 bezüglich der Schenkel 14 und 15 vorgesehen sein.

In Fig. 4 ist ein viertes Ausführungsbeispiel eines Induktionskochfelds 1 in einer Schnittdarstellung gezeigt. Hier sind zumindest zwei Induktoren 4 und 18 dargestellt. Wie zu erkennen ist, ist eine Wanne 6 ausgebildet, die beide Induktoren 4 und 18 von unten und von der Seite umgibt. Dies ist unterschiedlich zur Ausgestaltung beispielsweise in Fig. 1, bei der die Wanne 6 lediglich zum seitlichen und unteren Umgeben des einen Induktors 4 ausgebildet ist. So kann vorgesehen sein, dass beispielsweise bei der Ausführung in Fig. 1 ein vorhandener zweiter Induktor durch eine separate zweite Wanne 6 von unten und von der Seite umgeben ist. Jeder Induktor wäre somit durch eine eigene separate Wanne 6 entsprechend umgeben.

Darüber hinaus ist zu erkennen, dass bei der Ausgestaltung in Fig. 4 die Induktoren 4 und 18 berührungslos und somit beabstandet zum Boden 19 der Wanne 6 angeordnet sind. Die Induktoren 4 und 18 sind bei diesem Ausführungsbeispiel in Fig. 4 direkt an der Unterseite 5 der Kochfeldplatte 2 angeordnet, insbesondere angeklebt.

Bei einer derartigen Ausgestaltung dient die Wanne 6 lediglich der elektromagnetischen Abschirmung, sie trägt bei diesem Ausführungsbeispiel nicht zur Erzeugung und Unterstützung des elektromagnetischen Feldes der Induktoren 4 und 18 bei. Dies ist anders in dem Ausführungsbeispiel in den Fig. 1 bis 3. Denn dort sind die Induktoren 4 direkt mit dem Boden 19 der Wanne 6 kontaktiert, so dass hier die Wanne 6 unterstützend zur Erzeugung des elektromagnetischen Feldes beiträgt.

Bei allen Ausführungsbeispielen kann vorgesehen sein, dass die Wannen 6 zusätzlich noch durch ein weiteres Gehäuse, welches beispielsweise aus Kunststoff ausgebildet sein kann, umgeben und aufgenommen sind.

Bei der Ausgestaltung in Fig. 4 ist vorgesehen, dass an den vertikalen Wänden 10 und 11 der Wanne 6 die Einhängeschenkel 12 und 13 ausgebildet sind jedoch bei dieser Ausführung schräg nach innen und unten orientiert angeordnet sind. Bei dieser Ausgestaltung ist somit der Trägerrahmen 7 von innen her kommend mit diesen Einhängeschenkeln 12 und 13 verbunden, wobei dazu beispielsweise die horizontalen Schenkel 14 vorgesehen sein können, die in diesem Ausführungsbeispiel dann nach außen orientiert sind.

Es kann bei der Ausführung in Fig. 4 ebenso vorgesehen sein, dass der Trägerrahmen 7 gemäß den Ausführungen in Fig. 2 und 3 ausgebildet ist und somit auch beispielsweise schräg nach oben und außen orientierte Schenkel 15 als Endteile oder anschließend an den horizontalen Schenkel 14 schräg nach unten und außen orientierte Schenkel 17 angeordnet sind.

Wie darüber hinaus aus den Darstellungen in Fig. 1 bis 3 zu erkennen ist, ist auch dort der Induktor 4 direkt mit der Unterseite 5 der Kochfeldplatte 2 mechanisch kontaktiert.

Einzelne Merkmale und Merkmalskombinationen der jeweiligen Ausführungsbeispiele in Fig. 1 bis 4 können einzeln oder auch in Kombination entnommen und mit Merkmalen oder Merkmalskombinationen von anderen Ausführungsbeispielen gemäß Fig. 1 bis 4 kombiniert werden, um neue Ausführungen zu gestalten die ebenfalls noch von der Erfindung umfasst sind.

Bei den gezeigten Ausführungsbeispielen ist vorgesehen, dass die Einhängevorrichtung 8 mit ihren Einhängeschenkeln 12 und 13 einstückig mit der Wanne 4 ausgebildet sind.

Des Weiteren ist gezeigt, dass der Trägerrahmen gegenüber dem schmalen Seitenrand 20 der Kochfeldplatte 2 nach innen zurückversetzt angeordnet ist.

### Bezugszeichenliste

- 1: Induktionskochfeld
- 2: Kochfeldplatte
- 3: Oberseite
- 4: Induktor
- 5: Unterseite
- 6: Wanne
- 7: Trägerrahmen
- 8: Einhängevorrichtung
- 9: Enden
- 10, 11: Wand
- 12, 13: Einhängeschenkel
- 14, 15: Schenkel
- 16: Aufnahme
- 17: Schenkel
- 18: Induktor
- 19: Boden
- 20: Seitenrand

## Patentansprüche

1. Kochfeld (1) mit einer Kochfeldplatte (2) und zumindest einer, unter der Kochfeldplatte (2) angeordneten Heizeinheit (4, 18), und mit einer unter der Kochfeldplatte (2) angeordneten und mit dieser über einen Trägerrahmen (7) verbundenen Wanne (6), die die Heizeinheit (4, 18) von unten umgibt, **dadurch gekennzeichnet, dass** die Wanne (6) an ihren freien Enden (9) ihrer vertikalen Wände (10, 11) eine Einhängevorrichtung (8) aufweist, welche zum Einhängen in den Trägerrahmen (7) ausgebildet ist.

2. Kochfeld (1) nach Anspruch 1, **dadurch gekennzeichnet, dass** die Einhängevorrichtung (8) zumindest einen schräg nach unten orientierten Einhängeschenkel (12, 13) aufweist.

3. Kochfeld (1) nach Anspruch 1 oder 2, **dadurch gekennzeichnet, dass** die Einhängevorrichtung (8) einstückig mit der Wanne (6) ausgebildet ist.

4. Kochfeld (1) nach Anspruch 1 oder 2, **dadurch gekennzeichnet, dass** die Einhängevorrichtung (8) als separates Element ausgebildet ist, welches an der Wanne (6) befestigt ist.

5. Kochfeld (1) nach einem der vorhergehenden Ansprüche, **dadurch gekennzeichnet, dass** sich die Einhängevorrichtung (8) zumindest im Wesentlichen über die gesamte Länge des freien Endes (9) der vertikalen Wände (10, 11) der Wanne (6) ausbildet.

6. Kochfeld (1) nach einem der vorhergehenden Ansprüche, **dadurch gekennzeichnet, dass** der Trägerrahmen (7) an der Unterseite (5) der Kochfeldplatte (2) befestigt ist.

7. Kochfeld (1) nach Anspruch 6, **dadurch gekennzeichnet, dass** der Trägerrahmen (7) gegenüber dem Rand (20) der Kochfeldplatte (2) nach innen versetzt angeordnet ist.

8. Kochfeld (1) nach einem der vorhergehenden Ansprüche, **dadurch gekennzeichnet, dass** das freie untere Ende des Trägerrahmens (7) als Aufnahme (16) für einen Einhängeschenkel (12, 13) der Einhängevorrichtung (8) ausgebildet ist.

9. Kochfeld (1) nach Anspruch 8, **dadurch gekennzeichnet, dass** der Einhängeschenkel (12, 13) im eingehängten Zustand von oben in die Aufnahme (16) eingreifend angeordnet ist.

10. Kochfeld (1) nach Anspruch 8 oder 9, **dadurch gekennzeichnet, dass** die Aufnahme (16) einen horizontalen Schenkel (14) als Auflage für den Einhängeschenkel (12, 13) aufweist.

11. Kochfeld (1) nach Anspruch 8 oder 9, **dadurch gekennzeichnet, dass** die Aufnahme (16) einen schräg nach oben orientierten Schenkel (15) als Endteil aufweist, und dadurch eine Aufnahmemulde für den Einhängeschenkel (12, 13) ausgebildet ist.

12. Kochfeld (1) nach einem der vorhergehenden Ansprüche, **dadurch gekennzeichnet, dass** die Wanne (6) aus einem metallischen Material, insbesondere Aluminium, ausgebildet ist.

13. Kochfeld (1) nach einem der vorhergehenden Ansprüche, **dadurch gekennzeichnet, dass** das Heizelement (4, 18) auf dem Boden (19) der Wanne (6) aufsitzt.

14. Kochfeld (1) nach einem der Ansprüche 1 bis 12, **dadurch gekennzeichnet, dass** das Heizelement (4, 18) berührungslos zum Boden (19) der Wanne (6) angeordnet ist und an der Unterseite (5) der Kochfeldplatte (2) befestigt ist.

15. Kochfeld (1) nach einem der vorhergehenden Ansprüche, **dadurch gekennzeichnet, dass** es als Induktionskochfeld (1) ausgebildet ist und die Heizeinheit ein Induktor (4, 18) ist.
